# EUROPÄISCHE PATENTANMELDUNG

(11) **EP 4 497 796 A1**
(43) Veröffentlichungstag der Anmeldung: **29.01.2025**
(21) Anmeldenummer: 24193033.8
(22) Anmeldetag: 13.01.2020
(51) Int. Cl.: C09J 7/26, C09J 7/29, E04B 1/68, E06B 1/62

(54) **VERFAHREN UND VORRICHTUNG ZUR HERSTELLUNG EINES DICHTBANDES UND DICHTBAND**

(30) Priorität: 11.01.2019 DE 102019100686; 07.01.2020 DE 102020100140
(62) Teilanmeldung aus: 20151526.9
(71) Anmelder: Tremco CPG Germany GmbH, 92439 Bodenwöhr (DE)
(72) Erfinder: Steinbacher, Franz, 92548 Schwarzach (DE); Komma, Markus, 93133 Burglengenfeld (DE); Hübschmann, Martin, 92546 Schmidgaden (DE); Nauck, Helmar, 12557 Berlin (DE)
(74) Vertreter: Bittner, Bernhard

(57) **Zusammenfassung**

Verfahren zur Herstellung eines Dichtbandes 1, insbesondere zum Abdichten von Gebäuden, mit den Verfahrensschritten:
- Bereitstellen eines auf einen sich in einer vorgegebenen Längsrichtung (D) erstreckenden Rollenkern (20) aufgewickelten Dichtbandes (10), welches in mehreren Windungen um den Windungen um die Längsrichtung (D) des Rollenkerns umläuft, wobei das Dichtband (10) wenigstens einen Schaumstoffträger aufweist.
- Einbringen wenigstens eines bezüglich der Längsrichtung (D) umlaufenden ersten Schnittes (S1) durch mehrere Windungen des Dichtbandes;
- Einbringen eines Mediums und insbesondere fließfähigen Mediums, einer Dichtmasse und/oder einer Dichtschicht in den umlaufenden Schnitt.

## Beschreibung

Die vorliegende Erfindung bezieht sich auf ein Verfahren zur Herstellung eines Dichtbands und ein Dichtband. insbesondere wird dabei ein Dichtband beschrieben, welches im Baubereich Einsatz finden kann, beispielsweise zum Abdichten von Fensterrahmen gegenüber Mauerwerk bzw. auch von Türrahmen gegenüber Mauerwerk und dergleichen. Derartige Dichtbänder sind aus dem Stand der Technik seit Langem bekannt. Dabei besteht zum Teil das Problem, dass Luft und Dampf und dergleichen durch das Dichtband hindurchtreten kann. Aus diesem Grunde sind aus dem Stand der Technik Dichtbänder bekannt, die am Rande oder in ihrem Inneren eine Schicht, wie etwa eine Folie aufweisen, welche den Durchtritt von Luft, aber auch von Dampf verhindern kann. Zur Herstellung derartiger Dichtbänder sind aus dem Stand der Technik viele Verfahren bekannt. So ist es beispielsweise möglich, dass zunächst ein Schaumstoffträger in mehrere Streifen geschnitten wird und an diesen Streifen anschließend eine Dichtfolie angebracht wird.

Diese Verfahren haben sich bewährt, sind jedoch teilweise relativ aufwändig. Der vorliegenden Erfindung liegt daher die Aufgabe zugrunde, insbesondere ein Verfahren zur Verfügung zu stellen, welches eine einfachere Herstellung von derartigen Dichtbändern, welche eine Dichtschicht aufweisen, ermöglicht. Neben dem hier verwendeten Begriff Dichtschicht kann auch allgemein der Begriff "Funktionsschicht" verwendet werden.

Diese Aufgabe wird erfindungsgemäß durch den Gegenstand des unabhängigen Anspruchs erreicht. Vorteilhafte Ausführungsformen und Weiterbildungen sind Gegenstand der Unteransprüche.

Bei einem erfindungsgemäßen Verfahren zur Herstellung eines Dichtbands, insbesondere zum Abdichten von Gebäuden wird zunächst ein sich auf einen in einer vorgegebenen Längsrichtung erstreckenden Rollenkern aufgewickeltes Dichtband zur Verfügung gestellt, welches in mehreren Windungen um die Längsrichtung des Rollenkerns umläuft, wobei das Dichtband, wenigstens einen Schaumstoffträger aufweist.

In einem weiteren Verfahrensschritt wird wenigstens ein bezüglich der Längsrichtung umlaufender erster Schnitt durch mehrere Windungen des Dichtbandes eingebracht. In einem weiteren Schritt wird ein fließfähiges Medium und insbesondere eine Klebmasse bzw. Dichtmasse in diesen umlaufenden Schnitt eingebracht, beispielsweise eingefüllt.

Im Gegensatz zu allen aus dem Stand der Technik bekannten Verfahren wird damit hier vorgeschlagen, dass letztlich die Trennschicht nicht vor dem Aufwickeln des Bandes auf einen Rollenkern erzeugt wird, sondern während und/ oder nach und insbesondere nach dem Aufwickeln des Dichtbandes. Auf diese Weise ist es möglich, dass Schnitte durch alle Schaumstofflagen erzeugt werden und in diesen Schnitten die spätere Dichtschicht aufgebracht werden kann.

Bei einem weiteren erfindungsgemäßen Verfahren zur Herstellung eines Dichtbandes, insbesondere zum Abdichten von Gebäuden wird zunächst ein auf einem sich in einer vorgegebenen Längsrichtung erstreckenden Rollenkern aufgewickeltes Dichtband zur Verfügung gestellt, welches in mehreren Windungen um die Längsrichtung des Rollenkerns umläuft, wobei das Dichtband wenigstens einen Schaumstoffträger aufweist.

In einem weiteren Verfahrensschritt wird wenigstens ein bezüglich der Längsrichtung umlaufender erster Schnitt durch mehrere Windungen des Dichtbandes eingebracht, wobei durch diesen Schnitt das Dichtband und der Rollenkern in zwei Teile getrennt werden. Das Dichtband bzw. der Schaumstoffträger wird dabei bevorzugt in zwei Schaumstoffträgerteile getrennt.

In einem weiteren Verfahrensschritt wird eine Beschichtung an eine Außenoberfläche wenigstens eines der beiden Teile aufgebracht. In einem weiteren Verfahrensschritt wird ein weiteres auf einen Rollenkern aufgewickeltes Dichtband an die mit der Beschichtung versehene Außenoberfläche angefügt und insbesondere angeklebt.

Anders als bei der oben dargestellten Ausführungsform, bei der der Rollenkern möglicherweise nicht geschnitten wird, wird hier vorgeschlagen, dass das aufgewickelte Dichtband vollständig geschnitten wird, insbesondere auch einschließlich des Rollenkerns. Damit erfolgt bevorzugt eine vollständige Trennung des aufgewickelten Dichtbands in wenigstens zwei, bevorzugt zwei und/ oder mehr Teile.

Diese besagte Beschichtung führt im Anschluss wiederum zu der zwischenliegenden und insbesondere diffusionsbehindernden Schicht.

Es wäre jedoch auch möglich, anstelle eines fließfähigen Mediums oder zusätzlich zu diesem ein Dichtmittel, eine Dichtschicht, ein Dichtungsband oder Dichtband in diesen Schnitt einzubringen. Auch wäre es möglich, in diesem Bereich eine Selbstklebung anzubringen Insbesondere könnte es sich dabei um ein Dichtmittel, ein Dichtungsband oder ein Dichtband handeln, welches in einer radialen Richtung der Rolle elastisch ist. Dabei wäre es möglich, dass dieses Dichtband oder ein Dichtungsband wenigstens einseitig und bevorzugt doppelseitig mit einer Klebeschicht versehen ist, um so an denjenigen Wandungen, welche den durch den Schnitt erzeugten Spalt bilden anhaftet. Die Anmelderin behält sich vor, auch für eine derartige Vorgehensweise Schutz zu beanspruchen.

Bei einem weiteren bevorzugten Verfahren wird zunächst mit einer Schnittbewegung der oben erwähnte Schnitt in die Dichtbandrolle eingebracht, und während des Zurückziehens einer Schneidvorrichtung das fließfähige Medium bzw. der Dichtstoff in den Schnitt eingebracht. Bevorzugt wird dabei das Werkzeug, welches zum Schneiden verwendet wird auch zum Einbringen des Dichtstoffes bzw. fließfähigen Mediums verwendet.

Dabei kann das betreffende Werkzeug neben einer Schneideeinrichtung wie einer Klinge auch Austrittsöffnungen aufweisen, welche dazu dienen, den Dichtstoff in den Schnitt einzubringen.

Bevorzugt wird mittels einer ersten Bewegung des Werkzeugs, etwa einer Vorwärtsbewegung der Schnitt in die Dichtbandrolle eingebracht und mittels einer zweiten Bewegung, etwa einer entgegengesetzten Rückwärtsbewegung der Dichtstoff eingebracht.

So kann beispielsweise die Bewegung, welche den Schnitt erzeugt, eine Bewegung in Richtung des Rollenkerns sein und die Bewegung, während derer wenigstens zeitweise der Dichtstoff eingebracht wird, eine Bewegung weg von dem Rollenkern der Dichtbandrolle.

Bei einem bevorzugten Verfahren wird das auf den Rollenkern aufgewickelte Band bezüglich der Längsachse gedreht. Dabei ist es möglich, dass besonders bevorzugt der Schnitte durch ein Messer angebracht ist. Dieses Messer kann dabei im Wesentlichen stationär angeordnet sein bzw. in einer geradlinigen Richtung, insbesondere auf den Rollenkern zu bewegen, um so den Schnitt in dem Rollenband zu erzeugen.

Bei einem weiteren Verfahren wird die Substanz bzw. die Klebemasse (bzw. in einer anderen Ausgestaltung die Dichtfolie) in Umfangsrichtung und/ oder in radialer Richtung der Dichtbandrolle gleichmäßig eingebracht. Auf diese Weise wird später eine gleichmäßige Verteilung der Dichtschicht erreicht. Bei einem weiteren bevorzugten Verfahren wird die Klebemasse beidseitig auf die durch den Schnitt erzeugten seitlichen Rollenwandungen aufgebracht. Dabei ist es möglich, dass wie unten genauer beschrieben, das Messer Austrittöffnungen aufweist, durch welche die Klebemasse auf die Schnitte bzw. die Wandungsabschnitte aufgebracht werden kann.

Bei einer weiteren vorteilhaften Ausführungsform ist der Rollenkern aus einem Papierstoff, beispielsweise aus Pappe hergestellt. Denkbar wäre auch ein Kunststoffkern.

Bei einem weiteren bevorzugten Verfahren liegt eine Schnittebene, die durch den ersten Schnitt erzeugt wird, senkrecht zu der Längsachse der Dichtbandrolle und/ oder senkrecht zu der Drehachse der Dichtbandrolle.

Bei einer weiteren vorteilhaften Ausführungsform handelt es sich bei dem Dichtstoff und einen pastösen Dichtstoff.

Vorteilhaft ist der Dichtstoff aus einer Gruppe von Dichtstoffen ausgewählt, welche Acryldichtstoffe, Silikondichtstoffe, Polyurethandichtstoffe, silanterminierte Polymere, Kautschukmasse, Butyl, PU- und Acryldispersionen, Kombinationen hieraus und/oder anstrichartige Modifikationen derartiger Materialien enthält. Daneben können diese hier als Dichtstoffe bezeichneten Substanzen auch in einer härteren Ausführung, als Klebstoffe verwendet werden.

Bei einem weiteren möglichen Verfahren wird der Dichtstoff vor dem Einbringen in den Schnitt temperiert und insbesondere erwärmt.

Es ist dabei möglich, dass das fließfähige Medium bzw. der Dichtstoff eine von seiner Temperatur abhängige Viskosität aufweist, insbesondere eine mit steigender Temperatur abnehmende Viskosität. Bevorzugt handelt es sich bei dem fließfähigen Medium um ein durch Erwärmung aushärtbares Medium. So könnten beispielsweise Hotmelt - Klebstoffe und/oder Hotmelt - Dichtstoffe zum Einsatz kommen.

Bei einem weiteren bevorzugten Verfahren wird der Dichtstoff mittels einer Pumpeneinrichtung zur Verfügung gestellt. Dabei kann ein Reservoir vorgesehen sein, welches den besagten Dichtstoff bzw. die Klebemasse enthält sowie eine Pumpeneinrichtung, welche den Klebstoff zu dem Spalt fördert.

Bei einem weiteren bevorzugten Verfahren kann das Messer bzw. die Schneideinrichtung, mit dem der Schnitt vorgenommen wird, Öffnungen aufweisen, durch welche der Klebstoff austreten kann.

Bei einem weiteren bevorzugten Verfahren wird auf dem Dichtband, insbesondere vor dem Aufbringen auf die Dichtbandrolle eine Abdeckschicht, wie insbesondere aber nicht ausschließlich ein sogenannter Liner aufgebracht.

Bei einem weiteren bevorzugten Verfahren wird der wenigstens eine Schnitt (bzw. der wenigstens eine Schnitt pro späterer Rolle) in der Längsrichtung bzw. der Drehrichtung der Dichtbandrolle aufgeweitet. Dies bedeutet, dass nicht nur ein Schnitt erzeugt wird, sondern die an diesen Schnitt angrenzenden Wandungen der Dichtbandrolle voneinander beabstandet bzw. auseinander gedrängt werden. Zu diesem Zweck kann ein Messer eingesetzt werden, welche sich entgegen der Schnittrichtung erweitert, sodass nicht nur der Schnitt erzeugt wird, sondern auch die Dichtbandrolle bzw. der Schaumstoff entsprechend aufgeweitet wird.

In diesen aufgeweiteten Bereich kann wie oben erwähnt der Dichtstoff eingefügt werden. Mit anderen Worten kann dieses Aufweiten etwa durch das Schneidmittel bzw. dessen Form erreicht werden. So ist es beispielsweise möglich, dass das Schneidmesser etwas breiter ist, als die üblichen Abstechmesser. Auch wäre es möglich, dass das Schneidmesser schräg steht, insbesondere schräg gegenüber der Schneidrichtung und so die Aufweitung des Schnitts erreicht wird.

Bei einem weiteren vorteilhaften Verfahren wird das fließfähige Medium (oder ggfs. die Dichtfolie, bzw. eine Träger - Selbstklebung und/oder eine zweiseitig mit Kleber beschichtete Folie) unmittelbar nach dem Einbringen des Schnitts in diesen eingebracht. Es wäre dabei bei der Verwendung einer Dichtfolie möglich, dass an dem Schneidelement auch eine Spendeeinrichtung zum Ausgeben einer Dichtfolie angeordnet ist.

Bei einem weiteren bevorzugten Verfahren wird der Schnitt nach dem Einbringen des fließfähigen Mediums und/oder der Folie wieder verengt bzw. die den Schnitt begrenzenden Wandungen wieder aufeinander zugedrängt.

Bei einem weiteren bevorzugten Verfahren wird in das Dichtband ein zweiter Schnitt eingebracht, der gegenüber dem ersten Schnitt in der Längsrichtung versetzt ist, wobei der zweite Schnitt auch den Rollenkern schneidet. Bevorzugt handelt es sich bei dem Einbringen des zweiten Schnitts um das aus dem Stand der Technik bekannte Abstechen, mit dem von einer Langrolle eine Vielzahl von einzelnen Dichtbandrollen abgeschnitten bzw. abgestochen wird.

Bei einem weiteren bevorzugten Verfahren schneidet der erste Schnitt nicht den Rollenkern. Dies bedeutet, dass durch den ersten Schnitt ein Schnitt im Wesentlichen nur durch den Schaumstoffkörper erreicht wird und dieser aber noch auf dem Rollenkern verbleibt. Auf diese Weise wird auch der Schaumstoffkörper noch durch den Rollenkern stabilisiert. Bevorzugt weist der erste Schnitt damit eine kleinere radiale Tiefe auf als der zweite Schnitt. Der zweite Schnitt dient, wie oben erwähnt bevorzugt zum Abstechen von einzelnen Rollen. Wie oben erwähnt, können auch mehrere erste Schnitte zwischen zwei zweiten Schnitten angebracht werden.

Damit erfolgt bevorzugt das Abstechen der Rollen durch Schnitte, die bis zur Maschinenachse ragen. Im Gegensatz dazu wird der oben erwähnte erste Schnitt nur bis zu dem Pappkern (oder Kunststoffkern) ausgeführt. Weiterhin ist es auch möglich, dass nach dem Einbringen der Klebemasse die einzelnen Rollenteile wieder zusammengeschoben werden.

Bei einem weiteren bevorzugten Verfahren wird eine Vielzahl von ersten Schnitten und eine Vielzahl von zweiten Schnitten eingebracht, wobei die ersten Schnitte und die zweiten Schnitte jeweils in der Längsrichtung benachbart zueinander angeordnet sind. Bevorzugt folgt daher jeweils auf einen ersten Schnitt ein zweiter Schnitt und auf diesen wiederum ein erster Schnitt (in der Längsrichtung betrachtet).

Bei einem weiteren bevorzugten Verfahren wird zunächst eine Vielzahl von ersten Schnitten im Wesentlichen gleichzeitig eingebracht und anschließend eine Vielzahl von zweiten Schnitten. Es wäre jedoch auch denkbar, dass das Einbringen der ersten und der zweiten Schnitte im Wesentlichen gleichzeitig erfolgt, jedoch die zweiten Schnitte anschließend eingebracht werden, um so nach dem Einfügen der Klebemasse die einzelnen Rollen abzustechen. Weiterhin ist es auch möglich und bevorzugt, dass die besagten ersten und zweiten Schnitte nacheinander eingebracht werden. So könnte für das Einbringen der zweiten Schnitte nur ein Schneidmesser eingesetzt werden, welches nacheinander einzelne Rollen absticht.

Bei einem weiteren bevorzugten Verfahren können die einzelnen Schnitte im Wesentlichen äquidistant eingebracht werden. Bei diesem Verfahren befindet sich im Anschluss an das Abstechen der einzelnen Rollen die Dichtschicht im Wesentlichen in der Mitte der jeweiligen Rolle, betrachtet in einer Breitenrichtung der Rolle. Bevorzugt werden die ersten Schnitte in der Längsrichtung zueinander äquidistant eingebracht und/oder die zweiten Schnitte werden in der Längsrichtung zueinander äquidistant eingebracht.

Es wäre jedoch auch möglich, dass die ersten Schnitte bezüglich der einzelnen Rollen in der Breitenrichtung versetzt sind. Bei einem weiteren bevorzugten Verfahren werden Rollen erzeugt bzw. abgestochen, welche eine Rollenbreite von mehr als 10 mm, bevorzugt mehr als 20 mm und bevorzugt mehr als 25 mm aufweisen.

Bei einem weiteren bevorzugten Verfahren werden Rollen abgestochen, welche eine Breite von weniger als 600 mm, bevorzugt von weniger als 500 mm, bevorzugt von weniger als 400 mm, bevorzugt von weniger als 300 mm und besonders bevorzugt von weniger als 200 mm aufweisen.

Bei einem weiteren bevorzugten Verfahren werden die die Klebemasse bzw. den Dichtstoff enthaltenden Rollen temperiert und insbesondere erwärmt.

Auf diese Weise kann ein Aushärten des Dichtstoffes bzw. der Klebemasse erfolgen.

Bei einem weiteren bevorzugten Verfahren wird vor den oben beschriebenen Verfahrensschritten ein Schaumstoffträger entlang einer vorgegebenen Transportrichtung transportiert und auf den Rollenkern aufgewickelt. Vorteilhaft erstreckt sich der Schaumstoffträger in einer Transportrichtung, welche gleichzeitig eine Längsrichtung darstellt und in einer hierzu senkrechten Breitenrichtung.

Bei einem weiteren bevorzugten Verfahren erstreckt sich der Schaumstoffträger auch in einer Dickenrichtung, die jedoch bevorzugt signifikant geringer ist als die Längenrichtung und auch signifikant geringer als die Breitenrichtung.

Bei einem weiteren bevorzugten Verfahren wird der Schaumstoffträger komprimiert. Dabei kann das Komprimieren durch das Aufwickeln auf den Rollenkern erfolgen, es wäre jedoch auch denkbar und bevorzugt, dass der Schaumstoffträger komprimiert wird, bevor er aufgerollt wird.

Bei einem weiteren bevorzugten Verfahren wird das aufgerollte Dichtband in einem komprimierten Zustand gehalten. Dabei ist es möglich, dass um den Schaumstoffträger ein weiteres Band gewickelt wird, welches den Kompressionszustand hält. Dieses weitere Band kann dabei ebenfalls mit dem ersten und/oder zweiten Schnitt durchschnitten werden.

Bei einem weiteren bevorzugten Verfahren wird der Schaumstoffträger imprägniert.

Bei einem bevorzugten Verfahren wird der Schaumstoffträger auf weniger als 40 %, bevorzugt auf weniger als 30 % und besonders bevorzugt auf weniger als 20 % seiner ursprünglichen Dicke komprimiert.

Bei einem weiteren bevorzugten Verfahren wird der Schaumstoffträger auf mehr als 5 %, bevorzugt auf mehr als 7 % und besonders bevorzugt auf mehr als 10 % seiner ursprünglichen Dicke komprimiert.

Bei einem weiteren bevorzugten Verfahren wird an dem Träger und insbesondere einer Oberfläche des Trägers eine Klebeschicht aufgebracht. Dabei wird insbesondere auf einer Oberseite oder einer Unterseite diese Klebeschicht aufgebracht, das heißt auf einer Seite, die sich in der Längsrichtung und auch in der Breitenrichtung erstreckt. Bei einem besonders bevorzugten Verfahren wird diese Klebeschicht vollflächig aufgebracht. Dabei kann es sich insbesondere, aber nicht ausschließlich um eine Klebefolie handeln, insbesondere, aber nicht ausschließlich eine doppelseitig klebende Klebefolie.

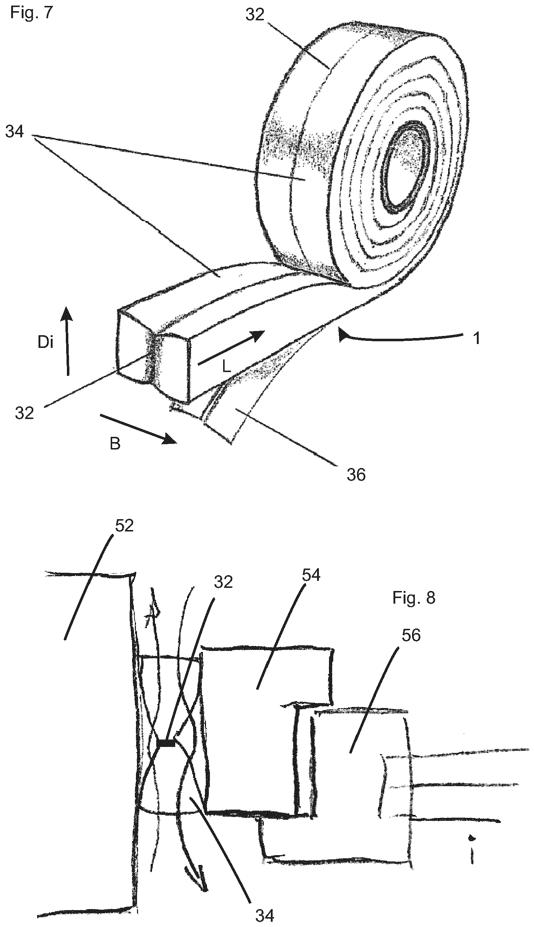

Es wäre dabei möglich, dass diese Klebefolie oder allgemein eine Klebeschicht selbst auch als luftdichte Schicht wirken kann. In diesem Fall kann ggfs. auf das Anbringen einer weiteren luftdichten Schicht an dem Schaumstoffträger verzichtet werden. So kann beispielsweise erreicht werden, dass an dem Schaumstoffträger nur an einer Seite bzw. einseitig eine weitere luftdichte Schicht angeordnet wird und auf der anderen Seite eine Klebeschicht diese Funktion übernimmt. Bevorzugt weist in einem Montagezustand diese weitere luftdichte Schicht zu einem Baukörper, der unten in Fig. 8 mit dem Bezugszeichen 52 versehen ist.

Bei einem weiteren bevorzugten Verfahren wäre es auch möglich, dass noch eine weitere Klebeschicht aufgebracht wird, etwa an einer Oberfläche des Schaumstoffträgers, der sich in der Längsrichtung und in der Dickenrichtung erstreckt.

Bevorzugt wird an dem Schaumstoffträger noch eine Abdeckschicht angebracht. Diese kann dabei insbesondere aber nicht ausschließlich an einer bereits mit der Klebeschicht versehenen Oberfläche angebracht werden Besonders bevorzugt handelt es sich bei dieser Abdeckschicht bzw. bei dem Liner um ein Silikonpapier.

Bei einem weiteren bevorzugten Verfahren wird auf wenigstens eine Oberfläche des Schaumstoffträgers eine weitere Schicht und insbesondere eine Schaumstoffschicht angebracht. Insbesondere handelt es sich hierbei um eine Oberfläche, die sich in der Längsrichtung sowie der Breitenrichtung des Schaumstoffträgers erstreckt.

Insbesondere handelt es sich dabei um einen luftdichten Schaumstoff. Dabei kann diese weitere Schaumstoffschicht eine geringere Dicke aufweisen als der Schaumstoffträger selbst. Besondere bevorzugt kann auch an beide Oberflächen des Schaumstoffträgers eine derartige weitere Schicht angebracht werden. Besonders bevorzugt wird zum Aufbringen ein geschlossenporiger Schaumstoff verwendet. Daneben wäre es auch denkbar, einen im Wesentlichen luftdichten oder sehr feinzelligen oder nahezu luftdichten Schaum zu verwenden.

Genauer gesagt könnte eine dieser weiteren Schichten an einer Oberseite des Schaumstoffträgers angeordnet sein, d. h. an einer Oberfläche, die durch die Längsrichtung und die Breitenrichtung des Schaumstoffträgers gebildet wird. Die andere der beiden Schichten könnte an der Unterseite des Schaumstoffträgers angeordnet sein. In diesem Fall ist bevorzugt der Schaumstoffträger durch zwischen diesen beiden weiteren Schichten angeordnet.

Es wäre jedoch auch denkbar, dass nur eine derartige Schicht vorgesehen ist und eine Selbstklebeschicht die Funktion der anderen Schicht übernimmt.

Bei einem weiteren bevorzugten Verfahren wird das Dichtband nach dem Eindringen des Dichtstoffes bzw. Klebstoffs thermisch behandelt. Dabei kann diese thermische Behandlung auch nach dem Abstechen der einzelnen Dichtbandrollen erfolgen.

Bevorzugt handelt es sich bei diesem Schaumstoff bzw. der Schaumstoffbahn um einen imprägnierten Schaumstoff. Dabei ist es möglich und bevorzugt, dass dieser Schaumstoff noch vor dem Anbringen der Klebeschichten imprägniert wird.

Es wird daher im Rahmen der Erfindung vorgeschlagen, dass in einem vorbestimmten Bereich, etwa in der Mitte einer Multifunktionsbandrolle wenigstens ein Schnitt, ähnlich dem Schnitt beim Abstechen eingebracht wird, der dann mit einer Klebemasse "geimpft" wird. Dabei werden besonders bevorzugt die Schnittflächen mit einem pastösen Dichtstoff beaufschlagt bzw. benetzt.

Besonders bevorzugt wird die Dichtbandrolle als "Dock" hergestellt. Dabei ist es etwa denkbar, dass ein imprägnierter Schaumstoff, insbesondere ein PU-Schaumstoff auf 10 - 20% beispielsweise auf ca. 15 % seiner Anfangsstärke auf einen Pappkern (oder Kunststoffkern) komprimiert aufgerollt ist.

Damit sich die Komprimierung nicht löst, wird, wie oben erwähnt, der Dock bzw. die Rolle mit einem Band und insbesondere einem selbstklebenden Band umwickelt und somit in seiner Kompression gehalten. Das eigentliche fertige Dichtband wird bevorzugt in einer vorgegebenen Breite mittels eines Messers und insbesondere maschinell "abgestochen".

Bevorzugt wird der flüssige bzw. gelartige Klebstoff über eine Pumpe bereitgestellt und füllt besonders bevorzugt ein hohles Messer, welches wiederum hinten und/ oder an der Seite Öffnungen hat, die den Klebstoff an die Schnittkante führen.

Bei einem bevorzugten Verfahren werden die beiden Teile (d.h. die zuvor getrennten Teile) an der beschichteten Oberfläche aneinandergefügt und insbesondere aneinandergeklebt. Dabei wird bevorzugt zunächst eine Trennung zwischen den beiden Teilen bewirkt, das heißt diese beiden Teile werden getrennt. Anschließend werden die gleichen Teile nach dem Anbringen der Beschichtung wieder zusammengefügt.

Das Anbringen der Beschichtung kann hier auch in anderer Weise durchgeführt werden, etwa durch ein Aufsprühen, durch ein Anstreichen, aber auch gegebenenfalls durch das Zustellen eines Behältnisses, welches die Beschichtung enthält. Bei einem weiteren bevorzugten Verfahren werden die beiden Teile voneinander beabstandet und insbesondere in der Längsrichtung des Rollenkerns voneinander beabstandet.

Bevorzugt kann nach diesem Beabstanden die Beschichtung aufgebracht werden. Bei einem weiteren bevorzugten Verfahren werden die Teile nach dem voneinander Beabstanden wieder zusammengeführt. Es wäre jedoch auch möglich, dass die beiden Teile nicht in der Längsrichtung des Rollenkerns voneinander beabstandet werden, sondern senkrecht hierzu, beispielsweise gegeneinander verschoben werden. Auch auf diese Weise werden die Au-βenoberflächen der voneinander getrennten Rollenteile zugänglich.

Bei einer weiteren bevorzugten Ausführungsform werden eine Drehstellung des ersten Teils bezüglich einer Längsrichtung des Rollenkerns und eine Drehstellung des weiteren Teils bezüglich der Längsrichtung verglichen und/oder angepasst. Bevorzugt wird dabei bewirkt, dass eine Drehstellung der beiden Rollenteile vor und nach der Trennung bzw. vor und nach dem Schnitt nicht geändert wird. Auf diese Weise ist ein genaues Wiederanfügen bzw.

Ankleben der voneinander getrennten Teile aneinander möglich. Damit können auch die Lagen der einzelnen Windungen passgenau aneinander geklebt werden.

Dabei ist es möglich, dass an dem einen Teil und dem anderen Teil oder auch vorher noch an dem Rollenkern selbst Markierungen angebracht werden, beispielsweise an einer Außenoberfläche. Insbesondere können Markierungen an einer Umfangsoberfläche der aufgewickelten Rolle angebracht werden, welche sich besonders bevorzugt auch über den anzubringenden Schnitt hinwegerstrecken. Diese beiden Markierungen können bei dem Aneinanderanpassen der Drehstellung wieder miteinander derart in Deckung gebracht werden, dass auch nach dem Zusammenfügen der Teile wiederum eine durchgehende Markierung entsteht.

Bei einer weiteren bevorzugten Ausführungsform erfolgt das Anfügen eines weiteren auf einen Rollenkern aufgewickelten Dichtbandes an die mit der Beschichtung versehene Außenoberfläche durch ein Ankleben derselben. Wie oben erwähnt handelt es sich bevorzugt bei der Beschichtung um eine Klebeschicht.

Bei einer weiteren bevorzugten Ausführungsform wird in das Dichtband bzw. das aufgewickelte Dichtband ein zweiter Schnitt eingebracht, der gegenüber dem ersten Schnitte in der Längsrichtung versetzt ist, wobei auch der zweite Schnitt den Rollenkern mitschneidet. Bevorzugt wird eine Vielzahl von ersten und zweiten Schnitten angebracht, wobei durch den zweiten Schnitt die einzelnen Dichtbandrollen voneinander getrennt werden.

Die vorliegende Erfindung bezieht sich weiterhin auf eine Vorrichtung zur Herstellung eines Dichtbandes und insbesondere eines Dichtbandes der oben bezeichneten Art, wobei diese Vorrichtung eine um eine vorgegebene Drehachse drehbare Welle aufweist, welche zur Aufnahme eines Rollenkerns sowie eines um diesen Rollenkern in mehreren Windungen aufgewickelten Schaumstoffträgers geeignet und bestimmt ist. Dabei weist diese Vorrichtung wenigstens eine erste Schneideeinrichtung auf, welche dazu geeignet und bestimmt ist, wenigstens einen Schnitt in den Schaumstoffträger sowie bevorzugt auch den Rollenkern einzubringen, wobei durch diesen Schnitt das Dichtband und der Rollenkern in zwei Teile getrennt werden sowie eine Beaufschlagungseinrichtung, welche dazu geeignet und bestimmt ist, eine Beschichtung an eine Außenoberfläche wenigstens eines der beiden Teile anzubringen. Insbesondere handelt es sich dabei um eine Außenoberfläche, welche senkrecht zu einer Längsrichtung bzw. zu einer Erstreckungsrichtung des Rollenkern steht.

Insbesondere handelt es sich dabei um eine Seitenfläche der geschnittenen Rolle.

Bei einer weiteren vorteilhaften Ausführungsform weist die Vorrichtung eine zweite Schneideeinrichtung auf, welche dazu geeignet und bestimmt ist, einen zweiten Schnitt in den Schaumstoffträger sowie den Rollenkern einzubringen, wobei die erste Schneideinrichtung und die zweite Schneideinrichtung bezüglich einander versetzt sind und insbesondere in der Längsrichtung des Rollenkerns bezüglich einander versetzt sind.

Bei einer weiteren vorteilhaften Ausführungsform ist es denkbar, dass die Rolle einschließlich des Rollenkerns gegenüber der drehbaren Welle in der Längsrichtung der Welle verschiebbar ist. Weiterhin kann eine Drängvorrichtung vorgesehen sein, welche die beiden Teile voneinander beabstandet. Auf diese Weise kann ein Beschichten der jeweiligen Seitenflächen leichter erfolgen.

Die vorliegende Erfindung ist weiterhin auf ein sich auf einem sich in einer vorgegebenen Längsrichtung erstreckenden Rollenkern aufgewickeltes Dichtband gerichtet, welches in mehreren Windungen um die Längsrichtung des Rollenkerns umläuft, wobei das Dichtband einen ersten Schaumstoffträger und einen zweiten Schaumstoffträger aufweist, welche in dieser Längsrichtung nebeneinander angeordnet sind und welche durch eine Klebeschicht aneinander angeklebt sind, wobei das Dichtband nach dem Abwickeln von dem Rollenkern rückstellfähig ist.

Erfindungsgemäß ist das Dichtband derart gestaltet, dass es sich in einem in der Längsrichtung von der Klebeschicht beabstandeten Bereich in anderer Weise rückstellt als in dem Bereich der Klebeschicht. Unter einer Rückstellung wird verstanden, dass das Dichtband in an sich bekannter Weise nach dem Abrollen von einem Rollenkern wieder eine größere Breite oder Dicke des Schaumstoffes annimmt.

Dabei kann dieses Dichtband zur verzögerten Rückstellung imprägniert sein.

Unter dem Bereich, in dem die Klebeschicht angeordnet ist, wird insbesondere ein Bereich verstanden, der beispielsweise in der Längsrichtung links und rechts von der Klebeschicht angeordnet ist und auch die Klebeschicht selbst enthält. Dabei ist es vorgesehen, dass die Klebeschicht selbst weniger rückstellfähig ist als die diese umgebenden Schaumstoffe.

Unter einem von der Klebeschicht beabstandeten Bereich wird bevorzugt ein in der Längsrichtung (des Rollenkerns) erstes und drittes Drittel der Schaumstoffe verstanden. Bevorzugt handelt es sich um die ersten beiden Fünftel und die letzten beiden Fünftel, bevorzugt um die ersten drei Siebtel und die letzten drei Siebtel bezogen auf die Breitenrichtung des Dichtbandes.

Bevorzugt handelt es sich bei dem ersten Schaumstoffträger und dem zweiten Schaumstoffträger um Schaumstoffträger aus dem gleichen Material. Besonders bevorzugt ist das Dichtband an einer Schnittstelle des Schaumstoffträgers vorgesehen, das heißt an einer Stelle, an der der Schaumstoffträger vorher geschnitten wurde.

Bei einer weiteren vorteilhaften Ausführungsform weist die Klebeschicht eine Dicke (betrachtet in einer Richtung, welche senkrecht zu einer Ebene der Klebeschicht steht) auf, die größer ist als 0,02 mm, bevorzugt größer als 0,04 mm, bevorzugt größer als 0,08 mm, bevorzugt größer als 0,1 mm, bevorzugt größer als 0,2 mm, bevorzugt größer als 0,3 mm, bevorzugt größer als 0,4 mm, bevorzugt größer als 0,5 mm. Bei einer weiteren vorteilhaften Ausführungsform weist die Klebeschicht eine Dicke auf, die kleiner ist als 5 mm, bevorzugt kleiner als 3 mm, bevorzugt kleiner als 2 mm, bevorzugt kleiner als 1,5 mm, bevorzugt kleiner als 1 mm, bevorzugt kleiner als 0,9 mm, bevorzugt kleiner als 0,8 mm.

Bevorzugt weist die Klebeschicht eine vorgegebene Elastizität auf, jedoch insbesondere eine Elastizität die geringer ist als diejenige der anliegenden Schaumstoffe.

Bei einer weiteren vorteilhaften Ausführungsform weist das Dichtband eine weitere Klebeschicht an einer seiner Außenoberflächen auf und insbesondere an einer Oberfläche, welche senkrecht steht zu einer Ebene, in der sich die Klebeschicht erstreckt.

Dabei kann bevorzugt diese Klebeschicht mit einem weiteren Element, wie etwa einem Liner, abgedeckt sein.

Bei einer weiteren bevorzugten Ausführungsform weist das Klebeband ein weiteres Schaumstoffelement auf, welches besonders bevorzugt an einer Oberfläche angeordnet, beispielsweise angeklebt ist. Diese Oberfläche steht bevorzugt senkrecht zu der Ebene, in der sich die Klebeschicht erstreckt.

Bei einer weiteren bevorzugten Ausführungsform weist das Dichtband einen weiteren Schaumstoff auf, der an einer weiteren entsprechenden Oberfläche angeordnet ist, welche senkrecht zu einer Ebene der Klebeschicht liegt.

Bevorzugt ist damit die Klebeschicht der beiden ersten Schaumstoffträger sandwichartig zwischen den beiden erwähnten weiteren Schaumstoffträgern aufgenommen.

Besonders bevorzugt sind diese weiteren Schaumstoffträger in einer Dickenrichtung des Schaumstoffs dünner als die erstgenannten Schaumstoffträger, welche mittels der Klebeschicht aneinander angeklebt sind.

Bevorzugt weist das Dichtband in einem abgewickelten und rückgestellten Zustand in einem Bereich der Klebeschicht eine geringere Dicke auf als in einem von der Klebeschicht beabstandeten Bereich. Unter der Breitenrichtung des Bandes wird dabei eine Richtung verstanden, welche der Längsrichtung des oben erwähnten Rollenkerns entspricht. Die Dicke bzw. eine Dickenrichtung verläuft dabei insbesondere in der Erstreckungsrichtung der Klebeschicht.

Die vorliegende Erfindung ist weiterhin auf ein Dichtband gerichtet, welches sich in einer Längsrichtung, einer zu der Längsrichtung senkrechten Breitenrichtung und einer zu der Längsrichtung und der Breitenrichtung senkrechten Dickenrichtung erstreckt, wobei das Dichtband ein erstes Schaumstoffteil und ein zweites Schaumstoffteil aufweist, welche sich nebeneinander in der Längsrichtung erstrecken und welche mittels einer Klebeschicht aneinander geklebt sind, wobei das erste Schaumstoffteil und das zweite Schaumstoffteil jeweils rückstellfähige Schaumstoffteile sind und wobei das Dichtband einen ersten Abschnitt sowie einen zweiten Abschnitt aufweist, welche jeweils von der Klebeschicht beabstandet sind sowie einen dritten Abschnitt, welcher die Klebeschicht enthält, wobei sich diese Abschnitte in der Breitenrichtung nebeneinander erstrecken bzw. nebeneinander angeordnet sind.

Weiterhin weist das Dichtband in dem dritten Abschnitt wenigstens abschnittsweise eine geringere Höhe auf als in dem ersten oder dem zweiten Abschnitt.

Betrachtet in der Längsrichtung des Dichtbandes und in Breitenrichtung des Dichtbandes nimmt dabei die Höhe in Richtung der Klebeschicht ab, um dann nach und nach (d.h. nach Passieren der Klebeschicht) wieder zuzunehmen. Insbesondere in den Rändern des Dichtbandes wird daher die Höhe mehr oder weniger ausschließlich durch den Schaumstoff bzw. dessen Rückstellverhalten bestimmt.

Dabei ist es möglich, dass dieses Dichtband ein Zwischenprodukt ist und noch weiter verarbeitet wird, beispielsweise mit weiteren Schaumstoffelementen oder Schaumstoffträgern ausgestattet wird.

Vorteilhaft erfolgt diese Abnahme der Höhe in Richtung der Klebeschicht kontinuierlich oder im Wesentlichen kontinuierlich. Weiterhin weist dieses Dichtband bevorzugt in seinen unterschiedlichen in der Längsrichtung sich erstreckenden Bereichen ein unterschiedliches Rückstellverhalten auf.

Bei einer bevorzugten Ausführungsform ist eine Höhe des Dichtbandes im Bereich der Klebeschicht größer als 5 % der Höhe des Dichtbands in den Randbereichen bevorzugt größer als 10 %. Dabei wird diese Höhe ausgehend von einem vollständig rückgestellten Dichtband betrachtet.

Bevorzugt ist die Höhe des Dichtbands im Bereich der Klebeschicht kleiner als 90 %, bevorzugt kleiner als 70 %, bevorzugt kleiner als 50 %, bevorzugt kleiner 30 % , bevorzugt kleiner als 20% bezogen auf die Höhe in den Randbereichen des Dichtbandes.

Bei einer weiteren bevorzugten Ausführungsform weist das Dichtband an wenigstens einer Oberfläche einen weiteren Schaumstoffträger bzw. ein Schaumstoffelement auf. Dieses weitere Schaumstoffelement kann dabei an dieser Oberfläche angeklebt sein.

Bei einer weiteren bevorzugten Ausführungsform weist das Dichtband einen weiteren Schaumstoffträger auf, der an einer weiteren Oberfläche der Schaumstoffe angeklebt ist, wobei sich diese Oberfläche ebenfalls senkrecht zu der Ebene der Klebeschicht erstreckt.

Bevorzugt sind die beiden erstgenannten Schaumstoffträger sandwichartig zwischen den beiden anderen Schaumstoffträgern aufgenommen. Bevorzugt ist auch die Klebeschicht zwischen diesen beiden weiteren Schaumstoffträgern aufgenommen und erstreckt sich auf diese Weise von dem einen Schaumstoffträger zu dem zweiten Schaumstoffträger.

Bei einer weiteren bevorzugten Ausführungsform wirkt die besagte Klebeschicht auch als Sperrschicht, welche eine Diffusion von Luft oder Dampf (auch Luftstrom) durch das Dichtband behindert oder verhindert.

Die vorliegende Erfindung ist weiterhin auf eine Vorrichtung zur Herstellung eines Dichtbandes und insbesondere eines Dichtbandes der oben beschriebenen Art gerichtet. Diese Vorrichtung weist eine bezüglich einer vorgebebenen Drehachse D drehbaren Welle auf, welche zur Aufnahme eines Rollenkerns sowie eines um diesen Rollenkern in mehreren Windungen aufgewickelten Schaumstoffträgers geeignet und bestimmt ist und wenigstens eine erste Schneideinrichtung, welche dazu geeignet ist, einen ersten Schnitt in den Schaumstoffträger einzubringen und eine zweiten Schneideinrichtung, welche dazu geeignet und bestimmt ist, einen zweiten Schnitt in den Schaumstoffträger sowie den Rollenkern einzubringen, wobei die erste Schneideinrichtung und die zweite Schneideinrichtung entlang der Drehachse bezüglich einander versetzt sind. Bei der Drehachse handelt es sich insbesondere um eine im Wesentlichen horizontal angeordnete Achse

Erfindungsgemäß weist die Vorrichtung eine Einbringeinrichtung auf, welche dazu geeignet und bestimmt ist, in den ersten Schnitt ein Dichtmittel und insbesondere ein fließfähiges Dichtmittel einzubringen.

Es wird hier beschrieben, dass die Dichtbandrolle gedreht wird. Es wäre jedoch auch alternativ oder zusätzlich möglich, dass die Dichtbandrolle ruht und die Schneidmittel um diese umlaufen.

Es wird daher eine Vorrichtung vorgeschlagen, welche dazu dient, in einem als Rolle konfektionierten Schaumstoffkörper wenigstens zwei Schnitte einzubringen, wobei bevorzugt der erste Schnitt zum Einbringen eines Dichtmittels und der zweite Schnitt zum Abtrennen bzw. Abstechen von Dichtbandrollen dient.

Bevorzugt weist die Vorrichtung eine Vielzahl von ersten Schneideinrichtungen und zweiten Schneideinrichtungen auf. Diese Schneideinrichtungen sind dabei bevorzugt in Richtung der Drehachse abwechselnd zueinander angeordnet. Daneben wäre es auch denkbar, dass nur ein einzelnes Messer vorgesehen ist.

Bei einer weiteren bevorzugten Ausführungsform weist die Vorrichtung Aufweitungsmittel zum Aufweiten des durch die Schneideinrichtung erzeugten ersten Schnitts auf. Daneben können die Schneideinrichtungen (insbesondere diejenigen, welche den oder die ersten Schnitte einbringen auch Einbringelementen zum Einbringen des fließfähigen Mittels aufweisen.

Bei einer weiteren vorteilhaften Ausführung weist die Vorrichtungen Zustelleinrichtungen und/oder Antriebe auf, welche die Schneideinrichtungen auf die Rollen insbesondere in Richtung der Drehachse zustellen.

Bei einer weiteren vorteilhaften Ausführungsform weist die Vorrichtung eine Zuführeinrichtung und insbesondere eine Pumpeneinrichtung auf, welche das fließfähige Medium den erzeugten ersten Schnitten zuführt.

Weiterhin weist die Vorrichtung bevorzugt ein Reservoir zum Aufbewahren des fließfähigen Mediums auf.

Bei einer weiteren möglichen Ausführungsform weist die Vorrichtung Temperiereinrichtungen und insbesondere Erwärmungseinrichtungen auf, welche die Rolle insbesondere in einem Bereich der ersten Schnitte temperiert und insbesondere erwärmt.

Weiterhin weist die Vorrichtung bevorzugt eine Steuerungseinrichtung auf, welche eine Bewegung wenigstens einer zweiten Schneideinrichtung bezüglich wenigstens einer ersten Schneideinrichtung steuert.

Bei einer weiteren vorteilhaften Ausführungsform sind die Bewegungen einer Vielzahl von ersten Schneideinrichtungen miteinander synchronisiert. Auf diese Weise kann im Wesentlichen gleichzeitig eine Vielzahl von ersten Schnitten in die Rolle eingebracht werden. Es kann jedoch auch nur eine Schneideinrichtung vorgesehen sein.

Weiterhin bezieht sich die Erfindung auf ein Dichtband, welches nach dem oben beschriebenen Verfahren hergestellt ist.

Weitere Vorteile und Ausführungsformen ergeben sich aus den beigefügten Zeichnungen.

Darin zeigen:
- Fig. 1: Eine Darstellung einer Dichtbandrolle und ein Schneidmesser;
- Fig. 2: Eine Darstellung sämtlicher Schnitte, die in eine Dichtbandrolle eingebracht werden;
- Fig. 3: Eine schematische Darstellung der Aufweitung eines Schnitts;
- Fig. 4: Eine erste Darstellung eines Schneidmessers innerhalb der Dichtbandrolle mit Zuführungseinrichtung für einen Dichtstoff;
- Fig. 5: Eine weitere Darstellung einer Ausgestaltung eines Schneidmessers;
- Fig. 6: Eine Darstellung zur Durchführung eines erfindungsgemäßen Verfahrens;
- Fig. 7: Eine Darstellung einer Dichtbandrolle hergestellt nach einem erfindungsgemäßen Verfahren;
- Fig. 8: Eine Darstellung eines erfindungsgemäßen Dichtbands in einem Montagezustand in einem Gebäude; und
- Fig. 9: Eine Darstellung eines mit einer Klebeschicht versehenen Dichtbandes.

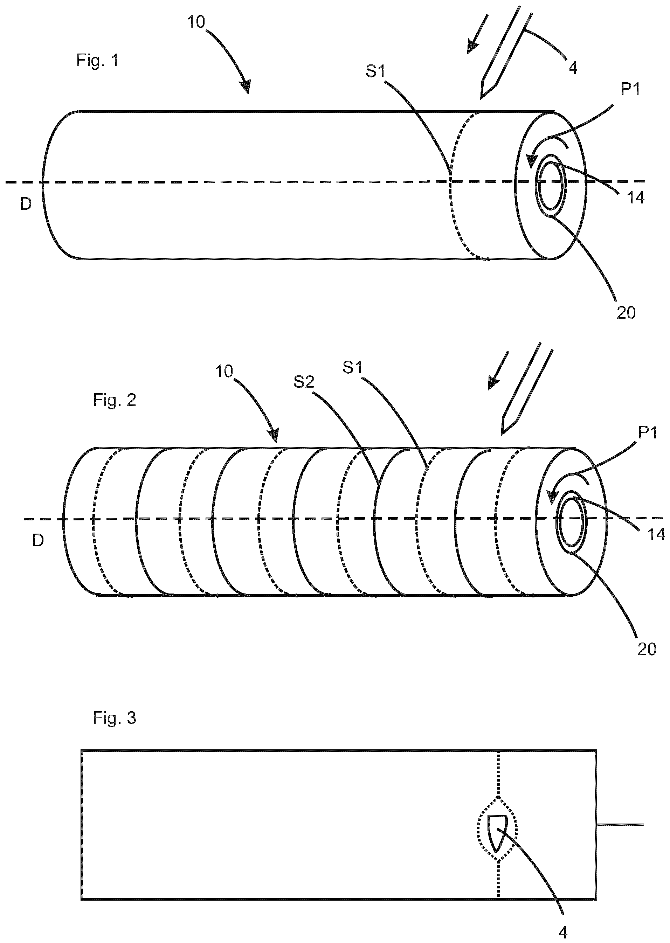

Figur 1 zeigt eine Darstellung einer Dichtbandrolle 10 zur Veranschaulichung eines erfindungsgemäßen Verfahrens. Dadurch bezieht sich das Bezugszeichen 14 auf eine Achse bzw. Welle einer Maschine, an welcher die Dichtbandrolle angeordnet ist. Die Dichtbandrolle 10 weist dabei einen Rollenkern 20 auf, an dem eine Vielzahl von (nicht genauer gezeigten) Schaumstoffwindungen aufgerollt ist. Das Bezugszeichen P1 kennzeichnet die Drehrichtung der Rolle. In Umfangsrichtung kann die Dichtbandrolle von einem Film oder Klebestreifen umgeben sein, der die Dichtbandrolle in einem komprimierten Zustand hält.

Das Bezugszeichen 4 kennzeichnet eine Schneideeinrichtung wie ein Schneidmesser, welches hier auf die Dichtbandrolle 10, wie durch den Pfeil veranschaulicht, zugestellt werden kann, um so einen ersten Schnitt S1 zu erzeugen. Eine Schnittebene dieses Schnitts verläuft senkrecht zu einer Drehachse D der Dichtbandrolle 10. Diese Drehachse bestimmt daher auch die Längsrichtung des Rollenkerns 20.

Durch diesen Schnitt werden zwar die einzelnen Windungen des Schaumstoffes geschnitten, nicht jedoch der Rollenkern 20. In diesen Schnitt kann, wie unten genauer erläutert wird, eine Klebemasse eingefügt bzw. eingefüllt werden.

Figur 2 zeigt die Dichtbandrolle aus Figur 1, wobei hier eine Vielzahl von Schnitten erkennbar ist. Insbesondere ist hier eine Vielzahl von ersten Schnitten S1, wie demjenigen, der in Figur 1 gezeigt ist, dargestellt, sowie auch eine Vielzahl von Schnitten S2. Diese Schnitte S2 schneiden auch den Träger 20 und dienen damit zum sogenannten Abstechen, das heißt zum Abtrennen der einzelnen Dichtbandrollen.

Man erkennt, dass die Schnitte S1 und S2 in der Längsrichtung bzw. entlang der Drehachse der Dichtbandrolle jeweils abwechselnd angeordnet sind. Genauer sind die Schnitte S1 hier jeweils mittig zwischen zwei Schnitten S2 angeordnet. Dies bedeutet, dass eine abgeschnittene Dichtbandrolle im Wesentlichen in ihrer Mitte einen ersten Schnitt S1 aufweist.

Figur 3 zeigt eine Darstellung zur Veranschaulichung eines Schneideelements 4 innerhalb eines Schnitts. Man erkennt, dass dieses Schneideelement einen sich in der Längsrichtung bzw. entlang der Drehachse der Dichtbandrolle erweiterten Querschnitt aufweist, um so auch den Schnitt S1 in diesem Bereich aufweiten zu können. In diesem Bereich kann in den Schnitt eine Klebemasse eingefügt werden.

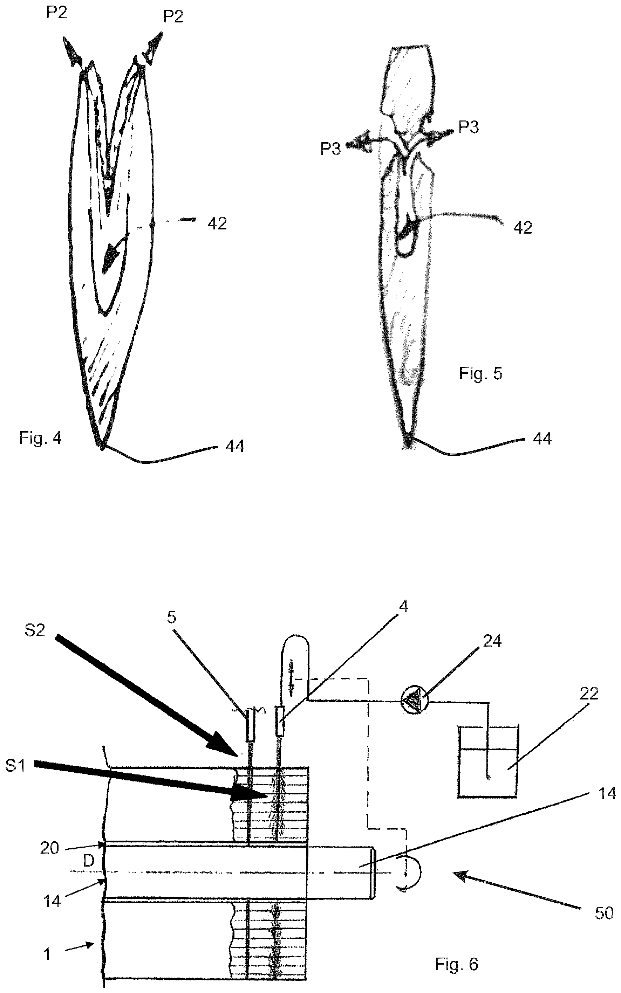

Figur 4 zeigt eine schematische Darstellung einer Schneideeinrichtung 4. Diese weist eine Schneidkante 44 auf, welche den eigentlichen Schnitt in den Schaumstoff einbringt. Daneben ist ein Hohlraum 42 vorgesehen, in den eine Klebemasse eingefügt werden kann.

Weiterhin ist es auch möglich, dass die Schneideeinrichtung 4 in ihrer Gesamtheit erwärmt wird, etwa um das Schneiden zu erleichtern, oder um die Klebemasse leichter in den Schnitt einbringen zu können. Dieses Erwärmen kann dabei durch die Zuführung elektrischer Energie erfolgen aber auch etwa durch ein Temperiermedium oder auch durch die Klebemasse bzw. das fließfähige Medium selbst.

Bei der in Figur 5 gezeigten Ausführungsform ist ebenfalls ein Hohlraum 42 vorgesehen, jedoch an anderer Stelle, sowie seitliche Öffnungen, über welche die Klebemasse aus dem Schneidmesser bzw. der Schneideeinrichtung austreten kann. Die Pfeile P2 in Figur 4 sowie die Pfeile P3 in Figur 5 kennzeichnen den Austritt den Dichtstoffes.

Figur 6 zeigt eine Darstellung einer erfindungsgemäßen Vorrichtung 50 zur Herstellung eines Dichtbandes. Auch hier ist wieder die drehbare Achse 14 vorgesehen, an der eine Dichtbandrolle mit einem Rollenkern 20 angeordnet ist. Die Bezugszeichen S1 und S2 kennzeichnen wieder Schnitte, welche durch das Schneidmesser 4 und ein weiteres Schneidmesser 5 eingebracht werden.

Das Bezugszeichen 24 kennzeichnet eine Pumpeinrichtung, welche aus einem Reservoir 22 eine Klebemasse in den durch die Schneideinrichtung 4 erzeugten Schnitt fördert.

Weiterhin kann die Maschine noch Temperiereinrichtungen aufweisen, welche die Dichtbandrolle insbesondere auch im Bereich der erzeugten Schnitte temperieren.

Daneben wäre es auch noch möglich, dass seitliche Zustellmittel vorgesehen sind, welche die Dichtbandrolle entlang ihrer Längsrichtung bzw. entlang ihrer Drehachse D komprimieren, sodass die erzeugten Schnitte wieder zusammengepresst werden.

Figur 7 zeigt ein durch das erfindungsgemäße Verfahren erzeugtes Dichtband 1. Dabei ist hier der Schaumstoffträger 34 vorgesehen, in dessen Mitte in der Breitenrichtung B der Schnitt und auch die Klebemasse angeordnet ist. Man erkennt, dass sich dieser Schnitt und auch die Klebemasse im Wesentlichen vollständig entlang der Dickenrichtung Di erstrecken. Daneben weist die Dichtbandrolle auch noch einen Abdeckfilm 36 bzw. einen Liner auf, der hier an der Unterseite des Dichtbandes angeordnet ist.

An dieser Unterseite kann weiterhin bevorzugt eine Klebeschicht angeordnet sein, um das Produkt beispielsweise in einem Bereich eines Gebäudes anzubringen.

Zusätzlich kann beispielsweise auf der Oberseite und/oder der Unterseite des Schaumstoffes noch ein (nicht gezeigter) weiterer Streifen bzw. eine weitere Schicht angeordnet sein und insbesondere eine luftundurchlässige Schicht.

Diese beiden Schichten sind in Fig. 7 nicht dargestellt, könnten sich jedoch hier an der in Fig. 7 gezeigten Oberseite und der Unterseite zwischen dem Schaumstoffkörper 34 und dem Abdeckfilm 36 befinden.

Figur 8 zeigt ein erfindungsgemäßes Dichtband 1 in einem Montagezustand zwischen zwei Baukörpern 52 und 54. Das Bezugszeichen 56 kennzeichnet einen weiteren Baukörper, etwa einen Fensterflügel. Man erkennt hier wiederum den Schaumstoffträger 34 sowie auch die Dichtschicht 32. Wie in Figur 8 gezeigt, kann der Dichtschicht 32 hier eine Mulde erzeugen, durch welche noch Luft hindurchtreten kann. Um dies zu verhindern, können wie oben erwähnt auf die Seitenflächen der Dichtbandrolle noch zusätzliche Streifen oder Schichten und insbesondere luftundurchlässige Schichten aufgebracht sein.

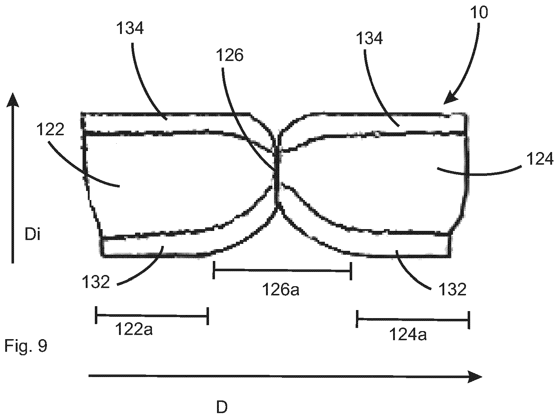

Fig. 9 zeigt eine Darstellung eines abgewickelten und rückgestellten erfindungsgemäße Dichtbandes. Dabei bezieht sich das Bezugszeichen 122 auf ein erstes Teil bzw. ein erstes Schaumstoffträgerteil und das Bezugszeichen 124 auf ein zweites Teil bzw. ein zweites Schaumstoffträgerteil.

Im Rahmen des oben beschriebenen Herstellungsverfahrens wurde der Schaumstoffträger in diese beiden Teile 122 und 124 geschnitten. Das Bezugszeichen 126 kennzeichnet die Klebeschicht, mittels derer die beiden Teile 122 und 124 aneinander geklebt sind.

Die Bezugszeichen 122a und 124a kennzeichnet jeweils in der Dickenrichtung D des Dichtbandes definierte Abschnitte, die von der Klebeschicht jeweils beabstandet sind, das Bezugszeichen 126a kennzeichnet einen Abschnitt, innerhalb dessen die Klebeschicht 126 angeordnet ist.

Man erkennt, dass Dicke Di in dem Abschnitt 126a und insbesondere an der Klebeschicht 126 geringer ist als in den Abschnitten 122a und 124a. Dies beruht darauf, dass sich der Schaumstoff in den Bereichen 122a und 124a im Wesentlichen ungehindert rückstellen kann, während er in dem Abschnitt 126a daran gehindert wird.

Bevorzugt geht die Dicke Di in den Abschnitten 122a und 124a kontinuierlich in die Dicke Di in dem Bereich 126 über.

An der Oberseite der Teile 122 und 124 ist ein weiterer Schaumstoffträger 134 angeordnet und insbesondere angeklebt und an der Unterseite der Teile 122 und 124 ein weiterer Schaumstoffträger 132.

Daneben ist bevorzugt noch an einer Außenoberfläche des Schaumstoffträgers ein Klebeschicht angeordnet, um das Dichtband an einem Bereich eines Bauwerks ankleben zu können.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Dichtband
- 4: Schneideeinrichtung
- 5: Schneidmesser
- 10: Dichtbandrolle
- 14: Achse
- 20: Rollenkern
- 22: Reservoir
- 24: Pumpeinrichtung
- 32: Dichtschicht, Funktionsschicht
- 34: Schaumstoffträger
- 36: Abdeckfilm
- 42: Hohlraum
- 44: Schneidkante
- 46: Baukörper
- 52: Baukörper
- 54: Baukörper, Fensterrahmen
- 56: Baukörper, Fensterflügel
- 122, 124: (Schaumstoffträger)teil
- 126: Klebeschicht
- 122a, 124a: erste Abschnitte
- 126a: zweiter Abschnitt
- 132, 134: weitere Schaumstoffträger
- B: Breitenrichtung
- Di: Dickenrichtung
- P1: Drehrichtung der Rolle
- S1: erster Schnitt
- S2: zweiter Schnitt
- L: Längenrichtung
- D: Drehachse
- Di: Dickenrichtung

## Patentansprüche

1. Verfahren zur Herstellung eines Dichtbandes 1, insbesondere zum Abdichten von Gebäuden, mit den Verfahrensschritten:
- Bereitstellen eines auf einen sich in einer vorgegebenen Längsrichtung (D) erstreckenden Rollenkern (20) aufgewickelten Dichtbandes (10), welches in mehreren Windungen um die Längsrichtung (D) des Rollenkerns (20) umläuft, wobei das Dichtband (10) wenigstens einen Schaumstoffträger aufweist.
- Einbringen wenigstens eines bezüglich der Längsrichtung (D) umlaufenden ersten Schnittes (S1) durch mehrere Windungen des Dichtbandes;
- Einbringen eines Mediums und insbesondere fließfähigen Mediums, einer Dichtmasse und/oder einer Dichtschicht in den umlaufenden Schnitt.

2. Verfahren nach Anspruch 1,
**dadurch gekennzeichnet, dass**
der eingebrachte Schnitt (S1) in der Längsrichtung (D) aufgeweitet wird.

3. Verfahren nach wenigstens einem der vorangegangenen Ansprüche,
**dadurch gekennzeichnet, dass**
in das Dichtband ein zweiter Schnitt (S2) eingebracht wird, der gegenüber dem ersten Schnitt (S1) in der Längsrichtung (D) versetzt ist, wobei der zweite Schnitt (S2) auch den Rollenkern (20) schneidet.

4. Verfahren nach wenigstens einem der vorangegangenen Ansprüche,
**dadurch gekennzeichnet, dass**
der erste Schnitt (S1) nicht den Rollenkern (20) schneidet.

5. Verfahren nach wenigstens einem der Ansprüche 1 - 3,
**dadurch gekennzeichnet, dass**
durch den ersten Schnitt das Dichtband (10) und der Rollenkern (20) ein zwei Teile getrennt werden und das Verfahren weiterhin die Schritte umfasst:
- Anbringen einer Beschichtung an eine Außenoberfläche wenigstens eines der beiden Teile (122, 124);
- Anfügen eines weiteren auf einen Rollenkern (10) aufgewickelten Dichtbandes (10) an die mit der Beschichtung versehene Außenoberfläche.

6. Verfahren nach wenigstens einem der vorangegangenen Ansprüche,
**dadurch gekennzeichnet, dass**
eine Vielzahl von ersten Schnitten (S1) und eine Vielzahl von zweiten Schnitten (S2) eingebracht wird, wobei die ersten Schnitte (S1) und die zweiten Schnitte (S2) jeweils in der Längsrichtung (D) benachbart zueinander angeordnet sind.

7. Verfahren nach wenigstens einem der vorangegangenen Ansprüche,
**dadurch gekennzeichnet, dass**
ein Schaumstoffträger entlang einer vorgegebenen Transportrichtung transportiert und auf dem Rollenkern aufgewickelt wird.

8. Verfahren nach wenigstens einem der vorangegangenen Ansprüche,
**dadurch gekennzeichnet, dass**
das aufgewickelte Dichtband in einem komprimierten Zustand gehalten wird.

9. Verfahren nach wenigstens einem der vorangegangenen Ansprüche 7 - 8,
**dadurch gekennzeichnet, dass**
an dem Träger eine Klebeschicht angebracht wird.

10. Verfahren nach wenigstens einem der vorangegangenen Ansprüche 7 - 9,
**dadurch gekennzeichnet, dass**
an wenigstens eine Oberfläche des Schaumstoffträgers ein weiterer und insbesondere luftdichter Schaumstoff angebracht wird.

11. Verfahren nach wenigstens einem der vorangegangenen Ansprüche 7 - 10,
**dadurch gekennzeichnet, dass**
das Dichtband nach dem Einbringen des Dichtmittels, der Dichtschicht und/oder des Klebstoffes thermisch behandelt wird.

12. Vorrichtung zur Herstellung eines Dichtbandes und insbesondere eines Dichtbandes nach wenigstens einem der vorangegangenen Ansprüche mit einer bezüglich einer vorgebebenen Drehachse D drehbaren Welle, welche zur Aufnahme eines Rollenkerns (20)sowie eines um diesen Rollenkern in mehreren Windungen aufgewickelten Schaumstoffträgers geeignet und bestimmt ist, mit wenigstens einer ersten Schneideinrichtung (4), welche dazu geeignet ist, wenigstens einen Schnitt (S1) in den Schaumstoffträger einzubringen und mit einer zweiten Schneideinrichtung (5), welche dazu geeignet und bestimmt ist, einen zweiten Schnitt (S2) in den Schaumstoffträger sowie den Rollenkern einzubringen, wobei die erste Schneideinrichtung (4) und die zweite Schneideinrichtung (5) bezüglich einander versetzt sind,
**dadurch gekennzeichnet, dass**
die Vorrichtung eine Einbringeinrichtung aufweist, welche dazu geeignet und bestimmt ist, in den ersten Schnitt (S1) ein Dichtmittel und insbesondere ein fließfähiges Dichtmittel einzubringen.

13. Ein auf einem sich in einer vorgegebenen Längsrichtung (D) erstreckenden Rollenkern (20) aufgewickeltes Dichtband (10), welches in mehreren Windungen um die Längsrichtung (D) des Rollenkerns (20) umläuft, wobei das Dichtband (10) einen ersten Schaumstoffträger (122) und einen zweiten Schaumstoffträger (124) aufweist, welche in der Längsrichtung (D) nebeneinander angeordnet sind und welche durch eine Klebeschicht (126) aneinander angeklebt sind, wobei das Dichtband nach dem Abwickeln von dem Rollenkern rückstellfähig ist.
**dadurch gekennzeichnet, dass**
sich das Dichtband in einem in der Längsrichtung (D) von der Klebeschicht (126) beabstandeten Bereich (122a, 124a) in anderer Weise rückstellt als in dem Bereich (126a) der Klebeschicht.

14. Dichtband (10) nach dem vorangegangenen Anspruch,
**dadurch gekennzeichnet, dass**
das Dichtband in einem abgewickelten und rückgestellten Zustand in einem Bereich (126a) der Klebeschicht eine geringere Dicke aufweist als in einem von der Klebeschicht beabstandeten Bereich (122a, 124a).

15. Dichtband (10), welches sich in einer Längsrichung (L), einer zu der Längsrichtung senkrechten Breitenrichtung (D) und einer zu der Längsrichtung (L) und der Breitenrichtung (D) senkrechten Dickenrichtung (Di) erstreckt, wobei das Dichtband (10) ein erstes Schaumstoffteil (122) und ein weites Schaumstoffteil (124) aufweist, welche sich nebeneinander in der Längsrichtung erstrecken und welche mittels einer Klebeschicht (126) aneinander geklebt sind, wobei das erste Schaumstoffteil (122) und das Schaumstoffteil (124) jeweils rückstellfähige Schaumstoffteile (122, 124) sind und wobei das Dichtband einen ersten Abschnitt (122a) sowie einen zweiten Abschnitt (124a) aufweist, welche jeweils von der Klebeschicht (126a) beabstandet sind sowie einen dritten Abschnitt (126a) welcher die Klebeschicht (26) enthält und diese Abschnitte (122a, 126, 124a) in der Breitenrichtung (D) nebeneinander angeordnet sind, wobei das Dichtband in dem dritten Abschnitt (D) wenigstens abschnittsweise eine geringere Höhe aufweist als in dem ersten Abschnitt (122a) und/oder dem zweiten Abschnitt (124a).
